# EUROPEAN PATENT APPLICATION

(11) **EP 2 999 241 A1**
(43) Date of publication of application: **23.03.2016**
(21) Application number: 14306435.0
(22) Date of filing: 17.09.2014
(51) Int. Cl.: H04W 4/02, H04L 29/08, H04W 12/02, H04W 88/02

(54) **System and method for determining and sharing a location of a mobile user device**

(71) Applicant: ALCATEL LUCENT, 92100 Boulogne-Billancourt (FR)
(72) Inventor: Vanderhulst, Geert, 2018 Antwerpen (BE); Mashhadi, Afra, Dublin (IE)
(74) Representative: D'Halleweyn, Nele Veerle Trees Gertrudis

(57) **Abstract**

A system for determining and sharing a location of a mobile user device, comprising:
- a location fingerprint receiving unit for receiving from said user device a location fingerprint, comprising a list of wireless network nodes, and their signal strengths, perceived by said mobile user device;
- a storage unit for storing said received location fingerprint;
- a location determining unit for determining a location of the mobile user device relative to a map of an area of interest for a third party, comprising at least one of a list of location fingerprints and locations thereof and a list of wireless network nodes and locations thereof, by matching said map to stored location fingerprints;
- a sending unit for sending at least an indication of the mobile user device being present at the area of interest, based on the determined location of the mobile user device, to the third party.

## Description

### Field of Invention

Embodiments of the invention relates to the field of determining a location of a mobile user device and in particular to systems and methods for determining and sharing a location of a mobile user device.

### Background

A user's location is the key piece of context information required by today's upcoming market of Location-Based Services (LBS). Consider for instance use cases like in-store location tracking and advertisements, reaching out to co-located people for security reasons, gaining insight in people's behavior, etc..

Services exist that aim to determine the user's location based on provided WiFi fingerprints. These services typically collect WiFi and cell tower fingerprint maps through war-driving or crowd-sourcing. In war-driving, dedicated vehicles with wireless scanning equipment are used to compose these maps, whilst the crowd-sourcing technique leverages the GPS location of end-user devices to annotate collected fingerprints.

Moreover, the concept of Cell Broadcast (CB) is known. CB is a mobile technology that allows messages to be broadcast to all mobile handsets and similar devices within a designated geographical area. The broadcast range can be varied, from a single cell to the entire network.

### Summary

The object of embodiments of the invention is to provide a system and a method for determining and sharing a location of a mobile user device, which require minimal user involvement and offer qualitative indoor and outdoor performances, while taking into account the privacy of the mobile device user and LBS providers or any other involved third parties.

According to a first aspect of the invention there is provided a system for determining and sharing a location of a mobile user device. The system comprises a location fingerprint receiving unit configured for receiving from the user device a location fingerprint, comprising a list of wireless network nodes, and their according signal strengths, perceived by the mobile user device and a storage unit configured for storing the received location fingerprint. The system further comprises a location determining unit configured for determining a location of the mobile user device, relative to a map of an area of interest for a third party, comprising at least one information of the group comprising a list of location fingerprints and/or locations thereof and a list of wireless network nodes and/or locations thereof, by matching the map to stored location fingerprints. The system also comprises a sending unit configured for sending at least an indication of the mobile user device being present at the area of interest, based on the determined location of the mobile user device, to the third party.

Embodiments of the invention are based *inter adia* on the insight that the mobile user device provides minimal information to the system, for the system to comprehend the location of the device, instead of the device scanning for the required information needed to pinpoint its own location, which information may not be available. In many indoor places, it is not possible for a device to calculate its position accurately due to a lack of information about the environment (e.g. which WiFi access points to expect, what is their transmit power, is there a fingerprint database available and where to find it?) which limits the use cases for LBS. For indoor location tracking, existing WiFi or 3/4G-based localization is popular because it does not require changes in infrastructure. However, this technology typically relies on an up-to-date database of annotated fingerprints (stored access points and their signal strengths at strategic locations in a building). In many cases, such database is (intentionally) not publicly available or maintained. For instance, think of WiFi fingerprint maps of a company building: this is likely to be sensitive information, suitable for in-company use only. The approach of the invention, wherein a mobile user device provides the system with identifiers of nearby network nodes (i.e. WiFi hotspots, LTE small cells,...) and their perceived signal strength, in the form of location fingerprints, resolves the problem of (private) fingerprint databases not being available for the user device to access. Location fingerprints are then matched with a map of an area of interest for third parties, for example LBS providers. Such a map can comprise location fingerprints of the particular area of interest and for each location fingerprint the actual position, where the fingerprint was perceived, or it can comprise local wireless network access nodes, optionally annotated with their position.

Moreover, the disadvantages of prior art systems, such as war-driving and crowd sourcing, to obtain fingerprint maps lay in the fact that they soon become outdated when the environment changes (e.g. small cells are added or removed) or depend on active user participation to construct maps or detect changes which can take an unpredictable amount of time. Moreover, these solutions offer limited accuracy for indoor use, given that GPS does not work inside buildings and vehicles swiping an area are constrained by road infrastructure. These problems are resolved by embodiments of the invention, since no GPS signal is needed for the mobile user device to send a location fingerprint to the system, and the coverage of location fingerprints that can be achieved this way is not limited by road infrastructure.

According to a preferred embodiment the system further comprises a timestamp unit configured for annotating the received location fingerprint with a timestamp, and the storage unit is further configured for storing the annotated location fingerprint for a predetermined period of time.

Using a timestamp and storage for a predetermined time allows for time information to complement the location information that is obtained from the mobile user device. The system is then able to annotate the determined location of the mobile user device with a time window to discover when, or for how long the mobile user device was at a particular area of interest.

According to a further embodiment the system further comprises a request receiving unit configured for receiving from the third party at least one request of the group comprising a time interval of interest and the map of an area of interest. The sending unit is further configured for sending at least an indication of the mobile user device being present at the area of interest during the time interval of interest, based on at least the determined location of the mobile user device and optionally its annotated location fingerprint, to the third party.

By providing the system with for example a private fingerprint map, which is not publicly available, the present invention has more information to determine the location of the a mobile user device, in comparison with the existing techniques of war-driving and crowd sourcing. The third party on the other hand can be sure that the private fingerprint map, annotated with location information is used by the system only to benefit the third party, without the map being publicly available. Instead of a private fingerprint map, a third party can send a map of wireless network nodes, if this information is available to the third party, within an area of interest. Knowing the (relative) location of the available network nodes of which a mobile user device can perceive a signal, can allow the location determining unit to determine the relative location of the mobile user device.

If the system receives from the third party a time interval of interest, it can determine whether a mobile user device is or was present in an area of interest during a certain time, based on for example the timestamp, used to annotate the location fingerprints sent by the mobile user devices, or based on the fact that a location fingerprint is (still) stored in the storage unit when they are only stored there for a predetermined time. A third party can also get an idea of the 'flow' of mobile user devices at a particular area of interest, by requesting the system to check for mobile user devices at different moments in time or during predefined time intervals.

According to a preferred embodiment the sending unit is further configured for sending the relative location of the mobile user device to the third party.

This allows a third party to exactly locate a mobile user device instead of only knowing whether the mobile user device is present in an area of interest, which can be a rather large area. This approach offers possibilities to observe the behavior of a user, or track the mobile user device by apprehending the location of the mobile user device at different moments in time.

According to an embodiment of the invention, the system further comprises a broadcasting unit configured for broadcasting messages to the mobile user device based on at least one information of the group comprising information on its presence within the area of interest.

This allows for example a third party such as a LBS to reach out, through the system, to a mobile user device located within a specific area or interest. Prior art Cell Broadcasting (CB) services, which also allow messages to be sent to all mobile user devices within a designated geographical area, only take into account the coarse location of a device (i.e. being within range of a cell), whereas the present invention supports a more detailed granularity by considering individual location coordinates. In addition, the presented invention works independently of the network a device is currently connected to.

According to a further developed embodiment the location fingerprint receiving unit is further configured for receiving location fingerprints from the mobile user device at different moments in time and the storage unit is further configured for storing the received location fingerprints. The system further comprises a deducing unit configured for deducing from said stored location fingerprints at least one significant location of the mobile user device. In addition the sending unit is configured for sending at least an indication of the mobile user device being present at the at least one significant location, based on the determined location of the mobile user device, to the third party.

A significant location can for example be a location where the user of the mobile user device spends a lot of time, such as home, work, school, etc.. These locations can be detected by looking at historical records of a user's location fingerprint and extracting persistent features. Information on these significant locations can be offered to a LBS as abstract location information. Thus, instead of exposing a user's geographical home location to the LBS, the system issues an event-based mechanism which notifies the LBS that a user is currently at home, hence preserving the privacy of the user.

According to a further embodiment the system further comprises a device anonymizing unit configured for assigning an anonymous device identifier to the mobile user device and the sending unit is further configured for referencing the mobile user device with said anonymous device identifier when sending location information to the third party.

This approach preserves the privacy of a user, while allowing the system to provide a third party with accurate, though anonymized, location information concerning the mobile user device. Since the mobile user device can be referenced with the anonymous device identifier, the system is able to follow or to track a particular mobile user device, distinguishing the device from other devices, at several moments in time, or during a predefined time interval, without providing the actual identity or personal information of the user to a third party.

To further increase the privacy of users, anonymous device identifiers can be changed periodically, e.g. every week, month, etc..

Prior art services exist which focus on sharing mobile user device sensor data with known or unknown individuals (public sharing). This approach potentially compromises the privacy of the users. Unlike these prior art systems, the proposed system does not explicitly share sensor data. Rather the system according to an embodiment of the invention matches input data from a mobile user device, with input data from a third party such as an LBS provider, and extracts therefrom location coordinates, which can be shared with the third party. However, neither the original mobile user device input data nor the identity of the device it originates from is known to a third party.

According to an embodiment the system further comprises a third party anonymizing unit configured for anonymizing third party information comprising at least one information of the group comprising said map of an area of interest, said time interval of interest and an identity of the third party.

This embodiment allows for the privacy of the third party to be preserved. This can be achieved by anonymizing the identity of the third party with respect to the presented map or time interval of interest, such that the according information or input cannot be linked with the third party. In addition, private maps containing for example private cells or infrastructure, are not stored by the system. Likewise, this private data is not shared with other parties. This allows for example for private/confidential wireless nodes, to remain private/confidential, while contributing to the localization of mobile user devices, as requested by the third party.

The use of private fingerprint maps, which are not publicly available, facilitates indoor (and outdoor) localization of mobile user devices. Such private fingerprints can provide greater detail and be kept up-to-date by e.g. a property owner, even automatically, without them being accessible to the public. Only the system uses these private maps, without sharing them with other parties, optionally in an anonymized fashion. The present system is therefore beneficial with respect to prior art services since it is does not envision that the device finds out its own location but that a third party, for example a LBS, can implicitly find out the location of a device. This way location data is indirectly and anonymously shared with an unlimited number of LBS. In prior art systems, the mobile user device tries to determine its own location and then explicitly shares the location on a per-application basis. This way, it can become costly to share the same information with multiple applications simultaneously. Even worse, depending on the localization technology at hand, it might incur that location coordinates need to be calculated for each application individually, which is highly power-inefficient. In addition hereto, different device operators may have implemented different localization techniques into their devices, introducing a segregation and bias in the population representation, whereas the presented system provides a more uniform representation of the population in a particular area, regardless of device operator.

Another consequence of the per-application approach of prior art systems is that a mobile user device can only share its location with a set of applications or LBS which are known to the device, for example a downloaded application. This dramatically constrains the potential of dynamic LBS which can be discovered on the go and which aims to provide value for the user. For instance, such an approach can prevent the fire department from reaching out to people residing in a given street, if they have not explicitly shared their whereabouts with the LBS of the fire department. Moreover, users might not even be aware such a LBS exists. The present invention is different in the sense that the device does not need to find out its own location to be able to share it, and that the LBS that wants to know the location of the device does not need to be known to the mobile user device for the LBS to gather the location information. An additional benefit of this approach over prior art systems is that the mobile user device only needs to send out a location fingerprint to the service, which is advantageous with respect to battery life of the device, as compared to the device needing to track or obtain its own location, using for example GPS localization.

According to a second aspect of the invention there is provided a method for determining and sharing a location of a mobile user device. The method comprises receiving from the mobile user device a location fingerprint, comprising a list of wireless network nodes, and their according signal strengths, perceived by the mobile user device, and storing said received location fingerprint. The method further comprises determining a location of the mobile user device, relative to a map of an area of interest for a third party, comprising at least one information of the group comprising a list of location fingerprints and/or locations thereof and a list of wireless network nodes and/or locations thereof, by matching said map to stored location fingerprints. The method further comprises sending at least an indication of the mobile user device being present at the area of interest, based on the determined location of the mobile user device, to the third party.

The skilled person will understand that the hereinabove described technical considerations and advantages for system embodiments also apply to the method embodiments, *mutatis mutandis.*

According to an embodiment the method further comprises annotating said received location fingerprint with a timestamp, and storing said annotated location fingerprint for a predetermined period of time.

According to a preferred embodiment the method further comprises receiving from the third party at least one request of the group comprising a time interval of interest and the map of an area of interest. The method further comprises sending at least an indication of the mobile user device being present at the area of interest during the time interval of interest, based on at least the determined location of the mobile user device and optionally its annotated location fingerprint, to the third party.

According to a preferred embodiment the method further comprises sending the relative location of said mobile user device to the third party.

According to an embodiment the method further comprises broadcasting messages to the mobile user device, based on at least one information of the group comprising information on its presence within the area of interest.

According to a further developed embodiment the method further comprises receiving location fingerprints from said mobile user device at different moments in time and storing said received location fingerprints. The method further comprises deducing from said stored location fingerprints at least one significant location of the mobile user device, and sending at least an indication of the mobile user device being present at the at least one significant location, based on the determined location of the mobile user device, to the third party.

According to an embodiment the method further comprises assigning an anonymous device identifier to the mobile user device and referencing the mobile user device with the anonymous device identifier when sending location information to the third party.

According to an embodiment the method further comprises anonymizing third party information, comprising at least one information of the group comprising the map of an area of interest, the time interval of interest and an identity of the third party.

According to a third aspect of the invention there is provided a mobile user device comprising a location fingerprint generating unit configured for generating a location fingerprint, comprising a list of wireless network nodes, and their according signal strengths, perceived by said mobile user device. The mobile user device further comprises a location fingerprint sending unit configured for sending said location fingerprint, to a system according to any one of the above described embodiments.

According to a further aspect of the invention, there is provided a computer program comprising computer-executable instructions to perform the method, when the program is run on a computer, according to any one of the steps of any one of the embodiments disclosed above.

According to a further aspect of the invention, there is provided a computer device or other hardware device programmed to perform one or more steps of any one of the embodiments of the method disclosed above. According to another aspect there is provided a data storage device encoding a program in machine-readable and machine-executable form to perform one or more steps of any one of the embodiments of the method disclosed above.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 is a schematic drawing of an exemplary embodiment of a system for determining and sharing a location of a mobile user device according to the invention;
Figure 2 schematically illustrates another exemplary embodiment of a system according to the invention;
Figure 3 schematically illustrates yet another exemplary embodiment of a system according to the invention;
Figure 4 is a flowchart illustrating an embodiment of an exemplary method for determining and sharing a location of a mobile user device according to the invention; and
Figure 5 is a schematic drawing of an exemplary embodiment of a mobile user device for sending location fingerprints to a system according to the invention.

### Description of embodiments

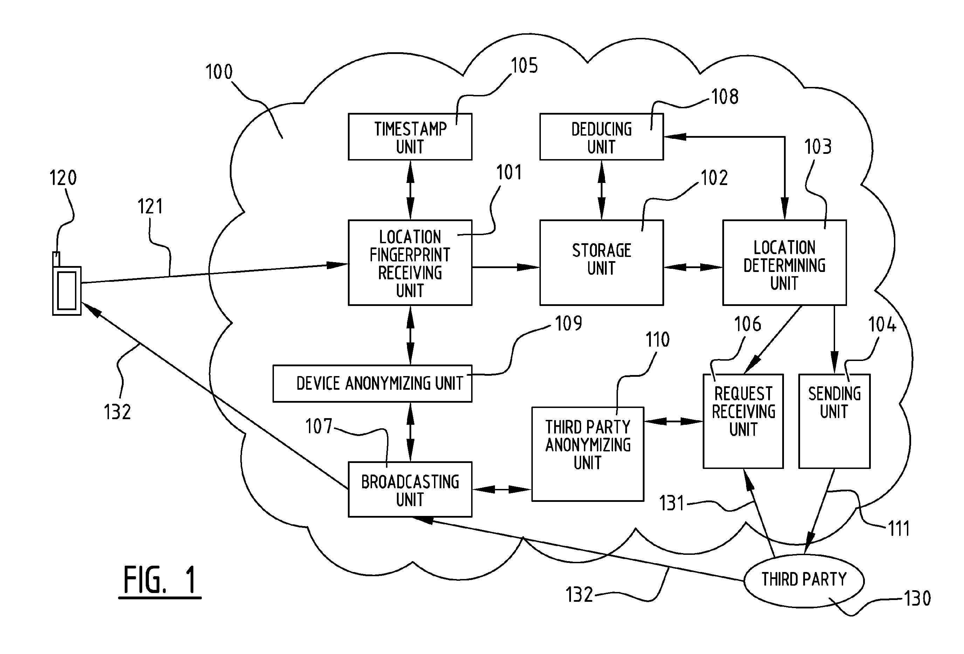

Figure 1 schematically shows an exemplary embodiment of a system 100 for determining and sharing a location of a mobile user device 120. The system comprises a location fingerprint receiving unit 101 configured for receiving from the mobile user device 120 a location fingerprint 121, comprising a list of wireless network nodes, and their according signal strengths, perceived by the mobile user device 120 and a storage unit 102 configured for storing the received location fingerprint 121. The system further comprises a location determining unit 103 for determining a location of the mobile user device, relative to a map of an area of interest for a third party 130, comprising at least one information of the group comprising a list of location fingerprints and/or locations thereof and a list of wireless network nodes and/or locations thereof, by matching the map to stored location fingerprints. To this end, the location determining unit 103 may employ existing algorithms for WiFi-based localization, in combination with a filtering algorithm that limits the set of location fingerprints that is fed to the localization algorithm. The system also comprises a sending unit 104 configured for sending at least an indication 111 of the mobile user device 120 being present at the area of interest, based on the determined location of the mobile user device, to the third party 130.

The mobile user device 120 thus only provides the system 100 with minimal information, which is the location fingerprint 121, and all other actions to determine the location of the mobile user device 120 and communicate location information to a third party 130, such as a LBS, are performed by the system. This approach results in a longer battery life for the mobile user device 120 since no further calculations or GPS connections are required to me made. In addition, to further preserve battery life of the mobile user device 120, scanning the environment for nearby cells to generate a location fingerprint 121 can be scheduled such that the scans, occurring regardless of the LBS 130, are exploited.

Except for the units discussed in the above paragraph, the system shown in figure 1 further comprises additional units which are optional, and of which the functionality will be described below, with regards to further embodiments of the invention.

According to a preferred embodiment the system further comprises a timestamp unit 105 configured for annotating the received location fingerprint with a timestamp, and the storage unit 102 is further configured for storing the annotated location fingerprint for a predetermined period of time. Using a timestamp and a storage for a predetermined time only allows for time information to complement the location information that is obtained from the mobile user device 120. The system 100 is then able to annotate the determined location of the mobile user device 120 with a time window to discover when, or for how long the mobile user device was at a particular area of interest.

According to a further embodiment the system 100 further comprises a request receiving unit 106 configured for receiving from the third party 130 at least one request 131 of the group comprising a time interval of interest and the map of an area of interest. The sending unit 104 is further configured for sending at least an indication 111 of the mobile user device 120 being present at the area of interest during the time interval of interest, based on at least the determined location of the mobile user device 120 and optionally its annotated location fingerprint, to the third party 130.

By providing the system with for example a private fingerprint map, which is not publicly available, the present invention has more information to determine the location of a mobile user device 120, in comparison with the existing techniques of war-driving and crowd sourcing. The third party 130 on the other hand can be sure that the private fingerprint map, annotated with location information is used by the system 100 only to benefit the third party 130, without the map being publicly available. Instead of a private fingerprint map, a third party 130 can send a map of wireless network nodes, if this information is available to the third party 130, within an area of interest, which contains the identifiers and locations of the nodes. Knowing the (relative) location, using for example a custom coordinate system relative to a given point, of the available network nodes of which a mobile user device 120 can perceive a signal, can allow the location determining unit 103 to determine the relative location of the mobile user device 120.

A third party 130 is also able to send a request to the system 100 in the form of a time interval of interest. A third party, for example a shopkeeper, may be interested in the location of clients in his shop at different times, to get an idea at which time most customers visit his shop.

According to a preferred embodiment the sending unit 104 is further configured for sending the relative location of the mobile user device 120 to the third party 130. This allows a third party 130 to exactly locate a mobile user device 120 instead of only knowing whether the mobile user device 120 is present in an area of interest, which can be a rather large area. This approach offers possibilities to observe the behavior of a user, or track the mobile user device 120 by apprehending the location of the mobile user device at different moments in time. To come back to the example of the shopkeeper, this embodiment allows him to not only know at which time most customers visit the shop, but to find out which departments or sections of his shop attract the most customers or if their can be distinguished a pattern of how customers navigate through his shop.

According to an embodiment of the invention, the system 100 further comprises a broadcasting unit 107 configured for broadcasting messages 132 to the mobile user device 120 based on at least one information of the group comprising information on its presence within the area of interest. This allows for example a third party 130 such as a LBS to reach out, through the system 100, to a mobile user device 120 located within a specific area or interest. This would allow the shopkeeper to send advertisements or discounts to the clients in his shop, or to people passing by to get them to come in and take a look. The messages that can be broadcast can further comprise location based warnings, questionnaires, etc..

According to a further embodiment the system 100 further comprises a device anonymizing unit 109 configured for assigning an anonymous device identifier to the mobile user device 120 and the sending unit 104 is further configured for referencing the mobile user device 120 with said anonymous device identifier when sending location information 111 to the third party 130. This approach preserves the privacy of a user, while allowing the system 100 to provide a third party 130 with accurate, though anonymized, location information 111 concerning the mobile user device 120. Since the mobile user device 120 can be referenced with the anonymous device identifier, the system 100 is able to follow or to track a particular mobile user device, distinguishing the device from other devices, at several moments in time, or during a predefined time interval, without providing the actual identity or personal information of the user to a third party 130. To further increase the privacy of users, anonymous device identifiers can be changed periodically, e.g. every week, month, etc..

The system 100 can for example be prompted by a third party 130 to send out location-based advertisements, e.g. one can anonymously query people who walked in a specific street at lunch time and reach out to them. Rather than asking a known user to share his location with a LBS via a dedicated application, the user can grant/deny any LBS access to anonymous location data and configure communication permissions using the proposed system.

Another third party 130 can for example be the government, who can use the system 100 to collect "people analytics" as to monitor citizen behavior, improve public infrastructure, warn about safety issues, etc..

According to an embodiment the system 100 further comprises a third party anonymizing unit 110 configured for anonymizing third party information comprising at least one information of the group comprising said map of an area of interest, said time interval of interest and an identity of the third party 130. This embodiment allows for the privacy of the third party 130 to be preserved. This can be achieved by anonymizing the identity of the third party 130 with respect to the presented map or time interval of interest, such that the according information or input cannot be linked with the third party 130. In addition, private maps containing for example private cells or infrastructure, are by default not stored by the system. Likewise, this private data is not shared with other parties. This allows for example for private/confidential wireless nodes, to remain private/confidential, while contributing to the localization of mobile user devices 120, as requested by the third party 130.

This embodiment further allows for indoor localization by matching fingerprints with dynamically provided fingerprint maps (also private ones). This enables an environment (e.g. corporate building, people's homes, etc.), for which no public fingerprints are available, to locate its users via a private location fingerprint map.

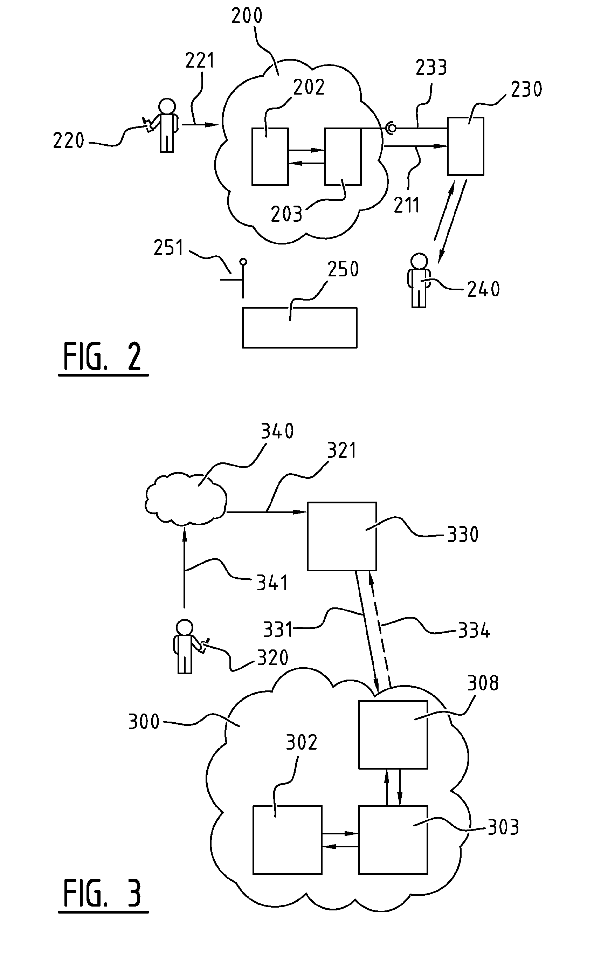

Figure 2 shows a possible embodiment of the present invention in a simplified representation. A novel system 200 is proposed for sharing location fingerprints rather than location coordinates. Mobile user devices 220 (mobile devices with a wireless network chip) collect location fingerprints and send them to the proposed system 200 (which is a simplified, less detailed representation of the system 100 of figure 1) where the location fingerprints can be annotated with a timestamp and are securely stored in the storage unit 202, which can comprise a location fingerprint database. The location fingerprints are for example stored for a predefined period of time only, after which period of time the location fingerprints expire. Such a location fingerprint consists of a list of wireless network nodes (i.e. WiFi hotspots and LTE small cells) that are sensed by a mobile user device 220 at a given location, along with the perceived signal strength of each sensed wireless network node. When location fingerprints are sent to the system 200, no calculations are performed. The mobile user device 220 just provides the fingerprints without expecting a result. To preserve energy, scanning the environment for nearby cells to compose these fingerprints can be scheduled intelligently such that the scans, occurring regardless of location-based services (LBS) 230 are exploited. Location-based services are an example of third parties which might be interested in obtaining location information on mobile user devices.

Location-based service providers 230 or other parties 240 can then leverage the proposed system 200 as follows: the LBS 230 can send a location fingerprint map as a query or request 233 to the system and receives a list of potentially anonymized location coordinates as a result 211. This fingerprint map 233 consists of a list of fingerprints which are annotated with a location thereof. This list could be generated through another party 240, who does not necessary need to have the ownership of the infrastructure (i.e. hotspots, small cells) 251, but requires to provide the fingerprint map of an area that is being queried or requested 250. For instance, a fingerprint map of a coffee shop 250 could contain various numbers of location coordinates (e.g., using a custom co-ordinate system relative to a given point) and location fingerprints corresponding to perceived signal strengths at each of those points. The present invention makes it possible for any party entity that has this information to query the system, regardless of whether they own the infrastructure (in this case regardless of whether or not they own the coffee shop 250).

Different types of location fingerprint maps can be distinguished:
- a map that lists a number of cell identifiers, each annotated with a location, indicating that being in reach of any of those, corresponds to a match (coarse location);
- a map that lists groups of cell identifiers, each annotated with a location, indicating that being in reach of all (or most) cells in a group, corresponds to a match (semi-coarse location);
- a map that lists groups of cell identifiers, each annotated with a location and perceived signal strengths, indicating that being in reach of all (or most) cells in a group, the group with best matching signal strengths corresponds to a match.

The skilled person will understand that the above list of exemplary types of location fingerprint maps is not exhaustive.

Upon receiving such a location fingerprint map request, the location determining unit 203 of the system matches the location fingerprints 221 collected from mobile user devices 220 with those in the location fingerprint map 233. To this end, existing algorithms for WiFi-based localization can be reused in combination with a filtering algorithm that limits the set of location fingerprints that is fed to the localization algorithm. Hence, given a set of location fingerprints (originating from a user) and given a map of fingerprints, of an area of interest, that are annotated with location data (originating from a third party or LBS), the system returns a list of location coordinates relative to the provided location fingerprint map. The coordinates correspond to location fingerprints that matched with the location fingerprint map and for which a location could be calculated.

An exemplary WiFi based location fingerprint 221, recorded by a user device 220 may be given by:
BSSID: 00:11:22:44:01, RSSI: -52;
BSSID: 00:11:22:44:02, RSSI: -22;
BSSID: 00:11:22:44:03, RSSI: -74;
wherein a Basic Service Set Identification (BSSID) represents a MAC address of a WiFi hotspot, and the Received Signal Strength Indication (RSSI) represents the signal strength (in arbitrary units) of the corresponding WiFi hotspot, sensed by the user device 220.

As mentioned before, a location fingerprint map 233, provided by an LBS or other third party comprises a list of location fingerprints 221, annotated with a location of where the fingerprints have been recorded. Accordingly, such a location fingerprint map 233 may look like this:
Location: (x1, y1)
   BSSID: 00:11:22:44:01, RSSI: -22;
   BSSID: 00:11:22:44:02, RSSI: -55;
Location: (x2, y2)
   BSSID: 00:11:22:44:01, RSSI: -40;
   BSSID: 00:11:22:44:02, RSSI: -25;
   BSSID: 00:11:22:44:03, RSSI: -70.
With the above illustrated location fingerprint 221 and location fingerprint map 223 as input, the location determining unit 203 will draw to the conclusion that there is a match and will determine the location reference from the best matching location fingerprint, in this case location (x2, y2), which can be provided to the third party.

There are several ways of creating such a location fingerprint map 223. For example they can be created manually, by walking around, indicating one's location on a digital floor plan, and adding the indicated location reference to a location fingerprint 221 recorded at that location. Alternatively, they can be created in an automated fashion by using a localization system like GPS or a dedicated indoor localization system. In this case, the user device determines its location, and annotates recorded location fingerprints with this location.

This annotated location information can be a coordinate, a semantic label (e.g. 'terminal 1', 'coffee shop east') or any indicator that makes sense to an LBS or other third party, even encrypted location references can be used. These locations do not need to include the physical locations of the network nodes included in the fingerprint.

Along with a fingerprint map, a LBS can include a timestamp or time interval to query for historical location data. Hence queries such as "How many unique users visited my store today?" and "At which time was it busiest?" or - on a larger scale - "Which trajectories do people typically follow throughout the city?" can be asked using location fingerprint maps.

In order to preserve the privacy of both the participating users 220 and the LBS providers 230, queries/requests (i.e. location fingerprint maps) are not stored by default and query results (i.e. location coordinates) are anonymized by means of the device anonymizing unit 109. Location results are annotated with an anonymous user identifier, allowing an LBS to distinguish between different users when trails of location coordinates are queried over time. To further increase the privacy of users, anonymous user identifiers can change periodically, e.g. every week.

However if a user is willing to give up some privacy in order to obtain a more personalized service from for example a LBS, the user can be able to reveal for instance the current pseudonym of the mobile user device 220 used for sharing location fingerprints and/or its identity (e.g. email address) to the LBS.

Besides allowing third parties to query the system 200, it is an object of the invention to enable for example LBS 230 to reach out to users 220. To this end, a LBS 230 can send a message to a user for example via the broadcasting unit 107 using the anonymous device identifier. Moreover, an LBS 230 can address all users 220 whose location matched a given query 233. As such, e.g. a LBS of a coffee shop 250 can get in touch with its customers and for example award them with coupons or advertise promotions. Or, the city planners can reach out to people in a given area (e.g. for which location fingerprints are available) and get in touch with people who just happen to continuously visit that area, without knowing their true identity. Further, a user could be given the option to blacklist or whitelist a given third party or LBS for reaching out to him.

In elaborating on the above described embodiments, it has become clear that the proposed system overcomes problems related to prior art systems described in the previous section, in that the present inventions assures that:
- location data is indirectly and anonymously shared with an unlimited number of LBS or other third parties;
- dynamic LBS can be supported, without the mobile user device having to explicitly share its location with a known LBS; and
- localization in private environments for which public location fingerprint maps are not available can be facilitated in a uniform way through the proposed system.

According to a further developed embodiment, and referring to figure 1, the location fingerprint receiving unit 101 is further configured for receiving location fingerprints 121 from the mobile user device 120 at different moments in time and the storage unit 102 is further configured for storing the received location fingerprints 121. The system further comprises a deducing unit 108 configured for deducing from said stored location fingerprints at least one significant location of the mobile user device 120. In addition the sending unit 104 is configured for sending at least an indication 111 of the mobile user device being present at the at least one significant location, based on the determined location of the mobile user device 120, to the third party 130.

A significant location can for example be a location where the user of the mobile user device 120 spends a lot of time, such as home, work, school, etc.. These locations can be detected by looking at historical records of a user's location fingerprint and extracting persistent features. Information on these significant locations can be offered to a LBS 130 as abstract location information. Thus, instead of exposing a user's geographical home location to the LBS, the system issues an event-based mechanism which notifies the LBS that a user is currently at home, hence preserving the privacy of the user.

A simplified representation of an exemplary embodiment is shown in figure 3. A mechanism for detecting significant locations (e.g., home, work, school, etc.) for a particular user is introduced, along with a set of services which use this information in order to personalize services towards the user. This is achieved by looking at historical records of a user's location fingerprints and extracting persistent features. The deducing unit 308 for deducing significant locations is responsible for inferring significant locations, visited by a user, and offers this information as an abstract location to a third party 330, for example a location-based service (LBS). Thus, instead of exposing a user's geographical home location to the LBS, the proposed system 300 issues an event-based system which notifies the LBS that a user is currently at home, hence preserving the privacy of the users. As a use case of this embodiment, figure 3 depicts a "Notification Scheduler Service" 330 (an example of LBS) which can for example take the user's personalized settings 321 regarding push notifications from a content provider 340 (e.g., Facebook) into consideration. Such personal setting could be for example, "delay the notifications that include videos until when I am at home" 341. The "Notification Scheduler Service" 330 can subscribe to the proposed system 300 and significant place detection service by submitting a query 331. The location determining unit 308 then generates an event 334 that is relayed to the "Notification Scheduler Service" 330 every time it detects a match between the query 331 and the user's current location fingerprint.

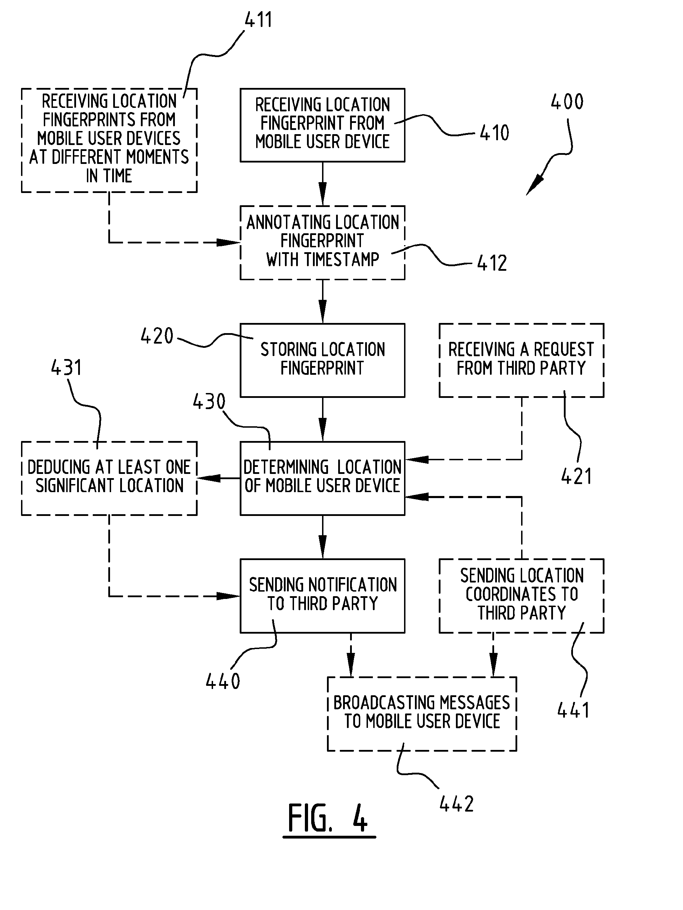

The flowchart in figure 4 schematically shows an embodiment for a method for determining and sharing a location of a mobile user device. Steps comprised in a first method embodiment are illustrated with full lines, whereas optional steps, which will be elaborated on in further embodiments below, are illustrated with dotted lines. The method comprises a step 410 of receiving from the mobile user device a location fingerprint, comprising a list of wireless network nodes, and their according signal strengths, perceived by the mobile user device, and a step 420 of storing said received location fingerprint. The method further comprises a step 430 of determining a location of the mobile user device, relative to a map of an area of interest for a third party, comprising at least one information of the group comprising a list of location fingerprints and/or locations thereof and a list of wireless network nodes and/or locations thereof, by matching said map to stored location fingerprints. The method further comprises a step 440 of sending at least an indication of the mobile user device being present at the area of interest, based on the determined location of the mobile user device, to the third party.

According to an embodiment the method further comprises a step 412 of annotating the received location fingerprint with a timestamp, and the step 420 of storing said annotated location fingerprint further comprises storing said annotated location fingerprint for a predetermined period of time.

According to a preferred embodiment the method further comprises a step 421 of receiving from the third party at least one request of the group comprising a time interval of interest and the map of an area of interest. Step 440 then further comprises sending at least an indication of the mobile user device being present at the area of interest during the time interval of interest, based on at least the determined location of the mobile user device and optionally its annotated location fingerprint, to the third party.

According to a preferred embodiment the method further comprises a step 441 of sending the relative location of said mobile user device to the third party.

According to an embodiment the method further comprises a step 442 of broadcasting messages to the mobile user device, based on at least one information of the group comprising information on its presence within the area of interest.

According to a further developed embodiment the method further comprises a step 411 of receiving location fingerprints from said mobile user device at different moments in time and a step 420 of storing said received location fingerprints, which could have been provided with a timestamp during step 412. The method further comprises a step 431 of deducing from said stored location fingerprints at least one significant location of the mobile user device, and the step 440 then further comprises sending at least an indication of the mobile user device being present at the at least one significant location, based on the determined location of the mobile user device, to the third party.

According to an embodiment the method further comprises a step of assigning an anonymous device identifier to the mobile user device, which is not shown in figure 4, and referencing the mobile user device with the anonymous device identifier during step 440 of sending location information to the third party.

According to an embodiment the method further comprises a step of anonymizing third party information, comprising at least one information of the group comprising the map of an area of interest, the time interval of interest and an identity of the third party. This step is not shown in figure 4.

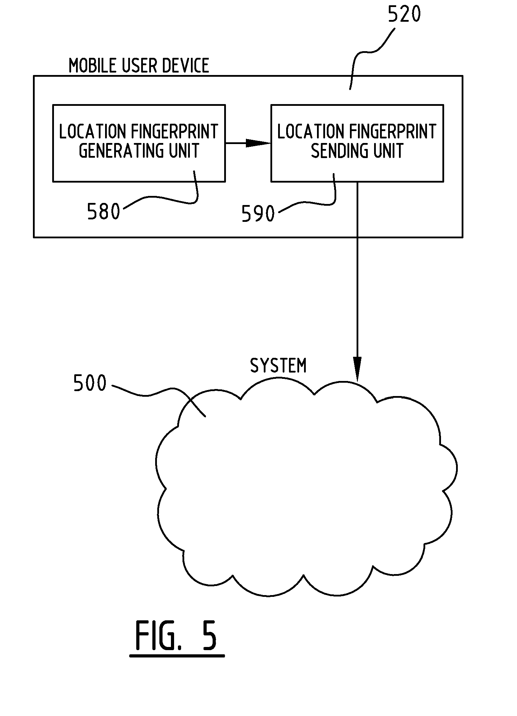

Figure 5 illustrates schematically a mobile user device 520 comprising a location fingerprint generating unit 580 configured for generating a location fingerprint, comprising a list of wireless network nodes, and their according signal strengths, perceived by said mobile user device. The mobile user device further comprises a location fingerprint sending unit 590 configured for sending said location fingerprint 521, to a system 500 according to any one of the above described system embodiments.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "processors", "units" or "modules", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor", "unit" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

## Claims

1. A system for determining and sharing a location of a mobile user device, comprising:
- a location fingerprint receiving unit configured for receiving from said user device a location fingerprint, comprising a list of wireless network nodes, and their according signal strengths, perceived by said mobile user device;
- a storage unit configured for storing said received location fingerprint;
- a location determining unit configured for determining a location of the mobile user device relative to a map of an area of interest for a third party, comprising at least one information of the group comprising a list of location fingerprints and locations thereof and a list of wireless network nodes and locations thereof, by matching said map to stored location fingerprints;
- a sending unit configured for sending at least an indication of the mobile user device being present at the area of interest, based on the determined location of the mobile user device, to the third party.

2. The system according to claim 1, further comprising a timestamp unit configured for annotating said received location fingerprint with a timestamp, and wherein the storage unit is further configured for storing said annotated location fingerprint for a predetermined period of time.

3. The system according to claim 1 or 2, further comprising:
a request receiving unit configured for receiving from the third party at least one request of the group comprising a time interval of interest and said map of an area of interest; and wherein
the sending unit is further configured for sending at least an indication of the mobile user device being present at the area of interest during the time interval of interest, based on at least the determined location of the mobile user device and optionally its annotated location fingerprint, to the third party.

4. The system according to any one of the preceding claims, wherein the sending unit is further configured for sending the relative location of said mobile user device to the third party.

5. The system according to any one of the preceding claims, further comprising
a broadcasting unit configured for broadcasting messages to the mobile user device based on at least one information of the group comprising information on its presence within the area of interest.

6. The system according to any one of the preceding claims, wherein
the location fingerprint receiving unit is further configured for receiving location fingerprints from said mobile user device at different moments in time;
the storage unit is further configured for storing said received location fingerprints; further comprising;
a deducing unit configured for deducing from said stored location fingerprints at least one significant location of the mobile user device; and wherein
the sending unit is configured for sending at least an indication of the mobile user device being present at the at least one significant location, based on the determined location of the mobile user device, to the third party.

7. The system according to any one of the preceding claims, further comprising
a device anonymizing unit configured for assigning an anonymous device identifier to the mobile user device; and wherein
the sending unit is further configured for referencing the mobile user device with said anonymous device identifier when sending location information to the third party.

8. The system according to any one of the preceding claims, further comprising
a third party anonymizing unit configured for anonymizing third party information comprising at least one information of the group comprising said map of an area of interest, said time interval of interest and an identity of the third party.

9. A method for determining and sharing a location of a mobile user device, comprising:
- receiving from said mobile user device a location fingerprint, comprising a list of wireless network nodes, and their according signal strengths, perceived by said mobile user device;
- storing said received location fingerprint;
- determining a location of the mobile user device relative to a map of an area of interest for a third party, comprising at least one information of the group comprising a list of location fingerprints and locations thereof and a list of wireless network nodes and locations thereof, by matching said map to stored location fingerprints;
- sending at least an indication of the mobile user device being present at the area of interest, based on the determined location of the mobile user device, to the third party.

10. The method according to claim 9, further comprising annotating said received location fingerprint with a timestamp, and storing said annotated location fingerprint for a predetermined period of time.

11. The method according to claim 9 or 10, further comprising:
receiving from the third party at least one request of the group comprising a time interval of interest and said map of an area of interest; and
sending at least an indication of the mobile user device being present at the area of interest during the time interval of interest, based on at least the determined location of the mobile user device and optionally its annotated location fingerprint, to the third party.

12. The method according to any one of the claims 9 to 11, further comprising sending the relative location of said mobile user device to the third party.

13. The method according to claims 9 to 12, further comprising
broadcasting messages to the mobile user device based on at least one information of the group comprising information on its presence within the area of interest.

14. The method according to any one of the preceding claims, further comprising receiving location fingerprints from said mobile user device at different moments in time; storing said received location fingerprints;
deducing from said stored location fingerprints at least one significant location of the mobile user device; and
sending at least an indication of the mobile user device being present at the at least one significant location, based on the determined location of the mobile user device, to the third party.

15. A mobile user device comprising
a location fingerprint generating unit configured for generating a location fingerprint, comprising a list of wireless network nodes, and their according signal strengths, perceived by said mobile user device; and
a location fingerprint sending unit configured for sending said location fingerprint, to a system according to any one of the claims 1 to 8.
